(19) Europäisches Patentamt

European Patent Office

Office européen des brevets

(11) **EP 2 636 991 A1**

(12) **EUROPEAN PATENT APPLICATION**

(43) Date of publication:
**11.09.2013 Bulletin 2013/37**

(51) Int Cl.:
*G01B 21/04* (2006.01)  *G01B 5/00* (2006.01)
*G01B 7/008* (2006.01)

(21) Application number: **12425050.7**

(22) Date of filing: **07.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Hexagon Metrology S.p.A.
Moncalieri (IT)**

(72) Inventor: **Russo, Domenico
10024 Moncalieri (IT)**

(74) Representative: **Franzolin, Luigi et al
Studio Torta S.p.A.
Via Viotti, 9
10121 Torino (IT)**

(54) **Measuring machine with compensation system for errors due to the thermal deformation of a scale of a linear transducer**

(57)     A measuring machine (1) comprising a member (5) mobile along an axis (Y), an optical scale (14) extending parallel to the axis (Y), a first reading head (15), which is carried by the mobile member (5) and co-operates with the optical scale (14), an additional sensor (20) carried by the mobile member (5), and a processing unit co-operating with the first reading head (15) and with the additional sensor (20) for detecting data correlated with the state of thermal expansion of the optical scale (14).

FIG. 2

EP 2 636 991 A1

**Description**

The present invention relates to a measuring machine provided with a system for compensating measuring errors due to thermal expansion of a scale of a linear transducer.

As is known, measuring machines comprise members that are mobile along co-ordinate axes in order to displace a measuring sensor in a measuring volume. Typically, the mobile members are constituted by a first carriage mobile with respect to a bench along a first axis, a second carriage carried by the first carriage and mobile with respect thereto along a second axis orthogonal to the first, and a spindle carried by the second carriage and mobile with respect thereto along a third axis orthogonal to the first two.

The displacement of the mobile members is generally detected via a transducer comprising a scale fixed, along the axis of motion, to the supporting and guide member, and a reading head fixed to the mobile member and co-operating with the scale for detecting the co-ordinates along the axis of motion. The transducer can be of an optical, capacitive, or inductive type, or of some other type. For example, in the case of an optical transducer, the scale is provided with a series of notches at constant intervals (for example 20 $\mu$m) that are detected by the reading head 14 and "counted" by the logic associated thereto.

Measuring machines are generally equipped with systems for compensating the measuring errors due to various causes (geometrical errors of the guides, static or dynamic deformation of the mobile members of the machine, thermal expansion of said members, etc.).

Normally, compensation of the thermal expansion of the scale of the transducer is also envisaged, which is based upon the measurement of the temperature and upon the knowledge of the coefficient of expansion of the scale. For this purpose, the latter is preferably made of a material with a low coefficient of thermal expansion, or in any case of a material having a certified thermal expansion, which renders it costly.

The aim of the present invention is to produce a measuring machine provided with an alternative system for compensating measuring errors due to thermal expansion of the scale of the linear transducer, as well as to a method for compensating said errors.

The aforesaid aim is achieved by a machine according to Claim 1 and by a method according to Claim 7.

For a better understanding of the present invention, three preferred embodiments are described in what follows by way of non-limiting examples and with reference to the attached drawings, wherein:

Figure 1 is a schematic perspective view of a measuring machine provided with an optical scale and a system for compensating the measuring errors caused by thermal expansion of the optical scale;

Figure 2 is a diagram illustrating a first embodiment of the compensation system;

Figure 3 is a schematic illustration of a second embodiment of the compensation system, in a first operating condition;

Figure 4 illustrates the system of Figure 3, in a second operating condition;

Figure 5 is a schematic illustration of a third embodiment of the compensation system, in a first operating condition; and

Figure 6 illustrates the system of Figure 5, in a second operating condition.

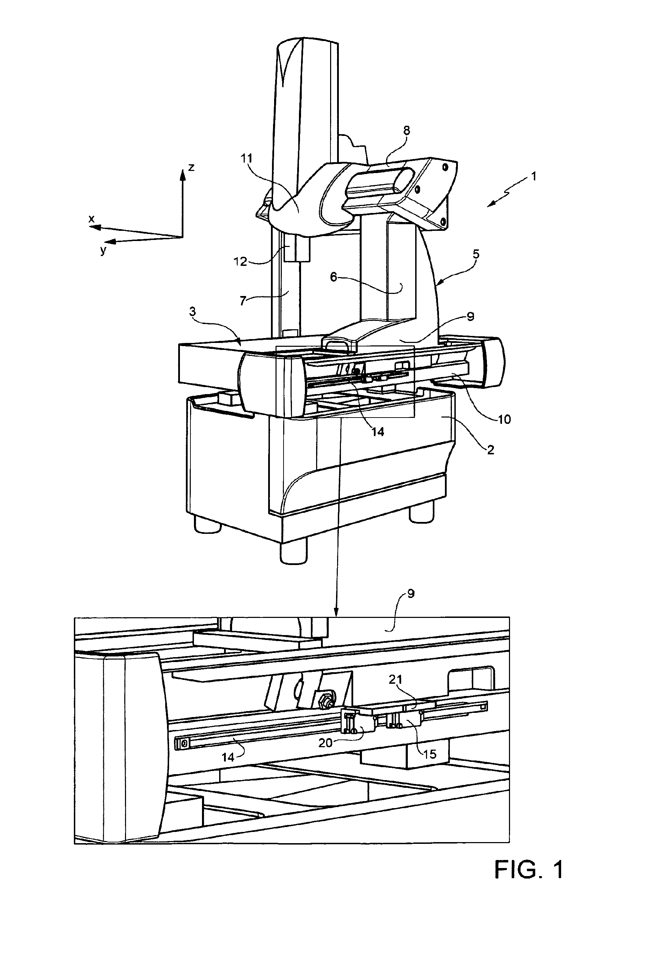

With reference to Figure 1, designated as a whole by 1 is a co-ordinate measuring machine. The machine 1 comprises a bench 2 provided with a horizontal plane top surface 3 or reference surface. The machine 1 further comprises a motor-driven carriage 5 that slides on the bench 2 along a first horizontal axis (axis Y) of a cartesian reference system X, Y, Z of the measuring volume.

The carriage 5 has a bridge structure and comprises two vertical uprights 6, 7 and a top horizontal cross member 8 that extends between the top ends of the uprights 6, 7.

The upright 6 comprises at the bottom a motor-driven slide 9 sliding on guides 10 parallel to the axis Y and provided, in a known way, in the proximity of a top longitudinal edge of the bench 2.

The cross member 8 carries a second carriage 11 designed to slide thereon along guides (not illustrated) in a direction parallel to a second axis (axis X) of the reference system.

The second carriage 11 carries a spindle 12 with vertical axis, mobile along its own axis parallel to a third axis (axis Z) of the reference system. The spindle 12 is designed to carry at the bottom a measuring sensor (not illustrated).

The machine 1 comprises, for each axis, a linear transducer for detecting the position of the corresponding mobile member on the axis itself. With particular reference to the carriage 5 and to the axis Y, the linear transducer comprises an optical scale 14 fixed to the bench 2 parallel to the axis Y (see enlarged detail in Figure 1), and a first reading head 15 fixed to the slide 9 and co-operating with the optical scale 14.

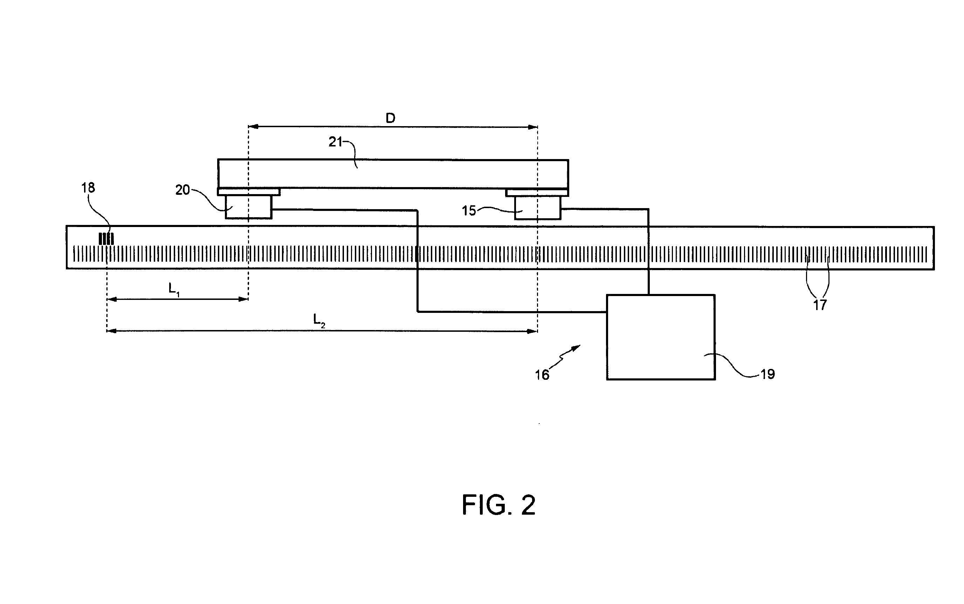

The optical scale 14 has, in a known way, a lattice of notches 17 arranged at regular intervals apart, for example every 20 $\mu$m, and a plurality of reference signs 18 arranged at greater intervals apart, for example 50 mm or 100 mm, just one of which is visible in Figure 2, which can be used for resetting of the reading head 15.

According to the present invention, the machine 1 comprises a system 16 for determination and compensation of measuring errors due to thermal expansion of the optical scale 14. The system 16 basically comprises an additional sensor mounted on the slide 9 and a processing unit 19 connected to the first reading head 14 and the additional sensor.

In the embodiment illustrated in Figure 2, the additional sensor is constituted by a second reading head 20 associated to the optical scale 14.

The first and second reading heads 15, 20 are spaced apart from one another along the axis Y by a known distance D. The distance D is known in so far as it can be considered substantially constant as the temperature varies or else varies in a known way therewith. For example, the two reading heads 15, 20 can be mounted on a bar 21 made of material with an extremely low coefficient of thermal expansion, such as Zerodur® (registered trademark of Schott AG), or else of a material having a known coefficient of thermal expansion. The bar 21 is conveniently mounted on the slide 9 so as to enable differential thermal expansion between the slide 9 and the bar itself.

The method for compensation of measuring errors due to thermal expansion of the optical scale 14 in the example illustrated is described in what follows.

In the first place, the reading heads 15 and 20 are reset at one and the same reference sign 18 on the optical scale 14. For this purpose, the carriage 5 is displaced in succession into a first position in which the sign 18 is read by the first reading head 15, and into a second position in which the sign 18 is read by the second reading head 20.

Once both of the reading heads 15, 20 have been reset on the same sign 18, the carriage 5 is displaced into a third position distinct from the previous ones (Figure 2). Each of the reading heads 15, 20 detects its own position on the optical scale 14. The distance between the two heads 15, 20 can consequently be calculated as the difference between the respective readings L1, L2.

By comparing the known value of distance D with the difference between the readings L1 and L2, it is possible to calculate a scale factor

$$\mathtt{SF} \quad = \quad \mathtt{D/(L1-L2)} \qquad\qquad [1]$$

with which the co-ordinates detected by the machine in the measuring step can be corrected.

In the case where D is not constant with the temperature, Eq. [1] becomes

$$\mathtt{SF} \quad = \quad \mathtt{D_{ref} \cdot (1+\alpha(T-T_{ref}))/(L1-L2)} \qquad\qquad [2]$$

where $D_{ref}$ is the value of D at the reference temperature $T_{ref}$, for example 20°C.

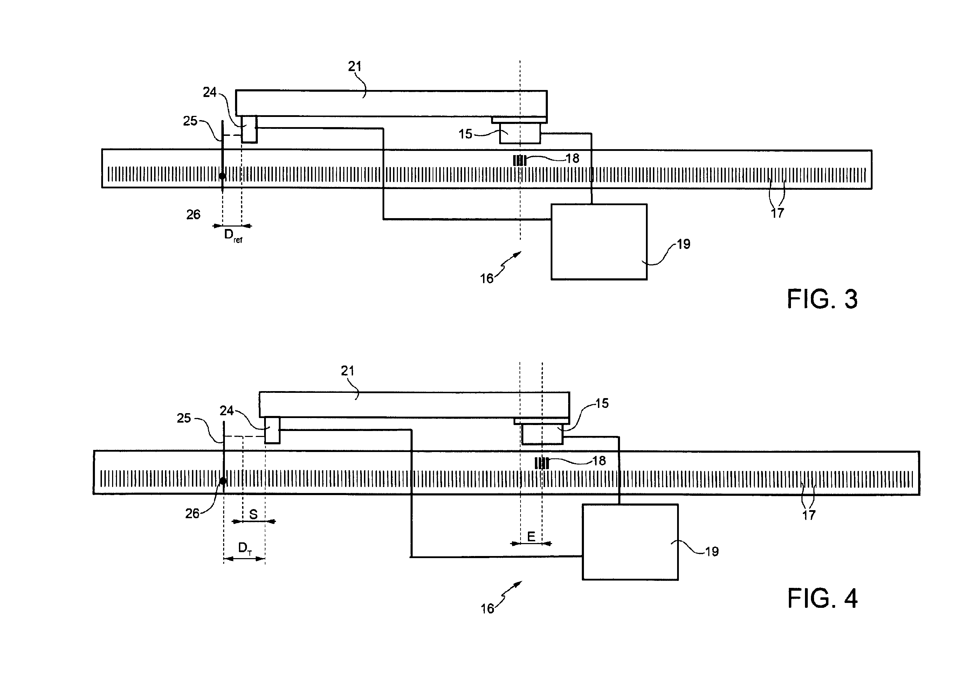

In the embodiment illustrated in Figure 3, the additional sensor is constituted by a distance sensor 24 configured for measuring the distance from a fixed reference 25, which is fixed with respect to a point 26 of the optical scale 14 that is fixed with respect to the bench 2 of the machine 1.

This embodiment, which is more economically advantageous than the previous one in so far as the distance sensor is less costly than a reading head, requires an operation of initial calibration in conditions of reference temperature $T_{ref}$ (Figure 2), where the distance from the fixed reference $D_{ref}$ is measured by the distance sensor with the carriage 5 set with the reading head 15 at a reference sign 18.

In conditions of operating temperature T (Figure 4), before carrying out a measuring cycle, the method according to the invention envisages the steps of:

- setting the carriage 5 with the reading unit 15 in the reference position at an operating temperature T;
- measuring the distance $D_T$ from the fixed reference by means of the distance sensor 24 at the operating temperature T;
- calculating the difference $S = D_T - D_{ref}$, which, on the hypothesis that the distance between the reading head 15 and the sensor 24 is constant, is equal to the displacement E of the reference sign 18 with respect to the fixed point 26 of the optical scale 14 as a result of thermal expansion.

The value S can be used for calculating a correction value and correcting the measuring data detected by said machine by means of said correction value.

For instance, if M is the distance of the reference sign 18 from the fixed point 26 at the reference temperature, the correction value can be defined by a scale factor FS calculated by applying the expression

$$\mathtt{SF} \quad = \quad \mathtt{M/(M-S)} \qquad\qquad [3]$$

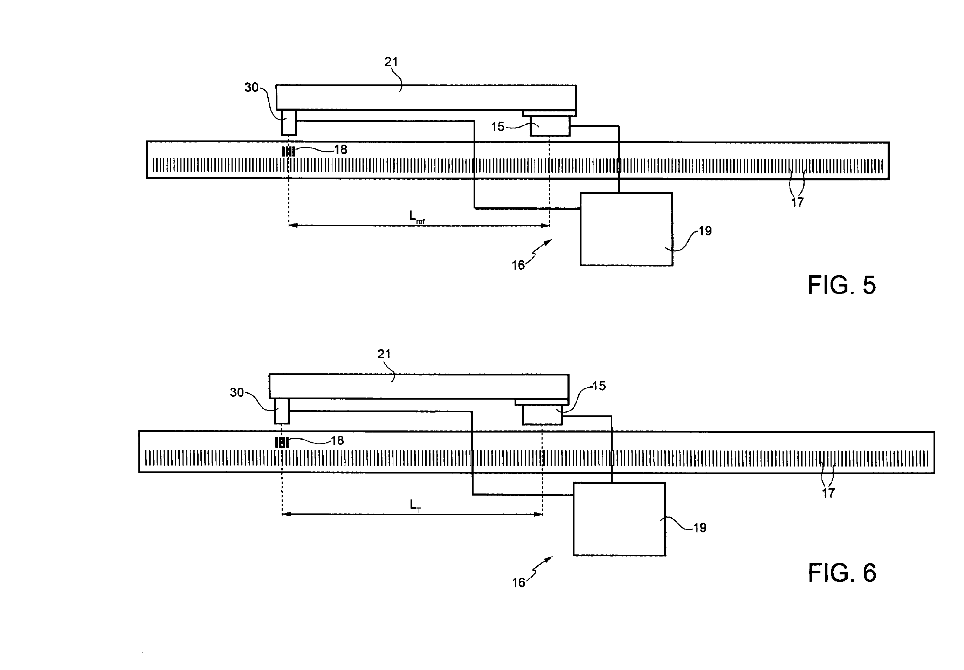

Illustrated in Figures 5 and 6 is a third embodiment of the present invention, where the additional sensor is constituted by an optical detector 30 configured so as to generate an enable signal 31 for reading the optical scale 14 by the reading head 15 when it detects the reference sign 18. In other words, reading of the optical scale 14 by the reading head 15 is "frozen" at the instant in which the optical detector 30 passes over the reference sign 18.

The operation is repeated at the reference temperature $T_{ref}$ and the operating temperature T. Through the two readings $L_{ref}$ and L of the reading head it is possible to determine the scale factor

$$\mathbf{FS} \quad = \quad \mathbf{L_{ref}/L} \qquad\qquad [4]$$

The formulas [3] and [4] refer to the hypothesis whereby the distance between the reading head and the additional sensor is constant. The formulas can be easily modified in the case where said distance cannot be assumed constant but varies with the temperature in a known way.

In each of the embodiments described, the scale factor FS constitutes a correction value by means of which the measurements made by the measuring machine and acquired via the processing unit 19 can be corrected to compensate for the errors induced by thermal expansion of the optical scale.

Finally, it is clear that modifications and variations may be made to the machine 1 and to the compensation system 16 illustrated herein, without thereby departing from the sphere of protection defined in the ensuing claims.

In particular, the machine can be of a type different from the one described, the compensation system can be applied to any mobile member of the machine, the additional sensor can be of any type, and the signals of the reading head and of the additional sensor can be processed in any suitable way to generate one or more correction values for compensating the measuring errors due to thermal expansion of the optical scale.

## Claims

1. A measuring machine (1) comprising at least one member (5) mobile in a direction parallel to an axis (Y) and a linear transducer for detecting the position of said mobile member (5) along said axis (Y), the transducer comprising a scale (14) extending parallel to said axis (Y) and a first reading head (15) carried by the mobile member (5) and co-operating with the scale (14), said measuring machine being **characterized in that** it comprises a system for compensating measuring errors due to thermal expansion of the scale (14) comprising an additional sensor (20; 24; 30) carried by said mobile member (5) and processing means co-operating with the first reading head (15) and with the additional sensor (20; 24; 30) for detecting data correlated with the state of thermal expansion of the scale (14).

2. The machine according to Claim 1, **characterized in that** the additional sensor is constituted by a second reading head (20) co-operating with said scale (14).

3. The machine according to Claim 2, **characterized in that** the first and second reading heads (15, 20) are spaced apart from one another along said axis (Y) by a distance (D) that does not vary with the temperature or varies in a known way therewith.

4. The machine according to Claim 2 or Claim 3, **characterized in that** said first and second reading heads (15, 20) are reset with respect to a common reference sign (18) set on the scale (14).

5. The machine according to Claim 1, **characterized in that** the additional sensor is constituted by a distance sensor (24) configured for measuring the distance from a fixed reference (25) fixed with respect to a fixed point (26) of said scale (14).

6. The machine according to Claim 1, **characterized in that** the additional sensor is constituted by a detector (30) configured for detecting a reference sign (18) on the scale (14), said processing means (19) being configured for recording the reading of said first reading head (15) when the detector (30) detects said reference sign (18).

7. A method for correcting measuring errors due to thermal expansion of a scale (14) of a linear transducer in a measuring machine, the machine comprising at least one member (5) mobile in a direction parallel to the scale (14) and a first reading head (15) carried by said mobile member (5) and co-operating with the scale (14), the method being **characterized in that** it uses an additional sensor (20; 24; 30) carried by said mobile member (5) and processing means (19) co-operating with the first reading head (15) and with the additional sensor (20; 24; 30) for detecting data correlated to the state of thermal expansion of the scale (14).

8.  The method according to Claim 7, wherein the additional sensor is constituted by a second reading head (20) co-operating with said scale (14) and set at a distance (D) from the first reading head (15) that does not vary with the temperature or varies in a known way therewith, comprising the steps of:

    - setting the mobile member (5) in a first reset position with the first reading head (15) at a reference sign (18) of the scale (14);
    - setting the mobile member (5) in a second reset position of the second reading head (20) at the same reference sign (18) of the scale (14);
    - setting the mobile member (5) in a third position;
    - calculating the distance between the first and second reading heads (15, 20) on the basis of the readings (L1, L2) of said first and second reading heads (15, 20) in the third position;
    - calculating at least one correction value (SF) by comparing the distance calculated on the basis of the readings (L1, L2) of said first and second heads (15; 20) in the third position with the value of the distance (D) known or calculated as a function of the temperature; and
    - correcting the measuring data detected by said machine (1) by means of said correction value (SF).

9.  The method according to Claim 7, wherein the additional sensor is constituted by a distance sensor (24) configured for measuring the distance from a fixed reference (25) fixed with respect to a fixed point (26) of said scale (14), comprising the steps of:

    - setting the mobile member (5) with the first reading head (15) in a reference position in conditions of reference temperature;
    - measuring the distance ($D_{ref}$) from the fixed reference (25) by means of said distance sensor (24) in said condition of reference temperature;
    - setting the mobile member (5) with the first reading unit (15) in the reference position at an operating temperature;
    - measuring the distance ($D_T$) from the fixed reference (25) by means of said distance sensor (24) in said condition of operating temperature;
    - calculating at least one correction value (SF) on the basis of the values of distance ($D_{ref}$, $D_T$) detected at the reference temperature and at the operating temperature; and
    - correcting the measuring data detected by said machine by means of said correction value (SF).

10. The method according to Claim 7, wherein the additional sensor is constituted by a detector configured for detecting a reference sign on said scale (14), comprising the steps of:

    - acquiring a first reading ($L_{ref}$) with the first reading head (15) in response to detection of the reference sign (18) by the detector (30) in conditions of reference temperature;
    - acquiring a second reading ($L_T$) with the first reading head (15) in response to detection of the reference sign (18) by the detector (24) in conditions of operating temperature;
    - calculating at least one correction value (SF) on the basis of said first and second readings; and
    - correcting the measuring data detected by said machine by means of said correction value (SF).

FIG. 1

FIG. 2

FIG. 3

FIG. 4

EP 2 636 991 A1

FIG. 5

FIG. 6

9

Europäisches
Patentamt

European
Patent Office

Office européen
des brevets

**EUROPEAN SEARCH REPORT**

Application Number

EP 12 42 5050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 199 19 042 A1 (HEIDENHAIN GMBH DR JOHANNES [DE]) 2 November 2000 (2000-11-02) * the whole document * ----- | 1-10 | INV. G01B21/04 G01B5/00 G01B7/008 |
| X | DD 248 865 A1 (ZEISS JENA VEB CARL [DD]) 19 August 1987 (1987-08-19) * the whole document * ----- | 1-3,7 | |
| A | US 6 446 350 B1 (NELLE GUENTHER [DE] ET AL) 10 September 2002 (2002-09-10) * the whole document * ----- | 1-10 | |

| TECHNICAL FIELDS SEARCHED (IPC) |
|---|
| G01B B23Q |

The present search report has been drawn up for all claims

| Place of search | Date of completion of the search | Examiner |
|---|---|---|
| Munich | 17 July 2012 | Rueda Gomez, Adriana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 2 636 991 A1**

## ANNEX TO THE EUROPEAN SEARCH REPORT
## ON EUROPEAN PATENT APPLICATION NO.

EP 12 42 5050

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2012

| Patent document cited in search report | | Publication date | Patent family member(s) | | Publication date |
|---|---|---|---|---|---|
| DE 19919042 | A1 | 02-11-2000 | NONE | | |
| DD 248865 | A1 | 19-08-1987 | NONE | | |
| US 6446350 | B1 | 10-09-2002 | AT | 356377 T | 15-03-2007 |
| | | | DE | 19857132 A1 | 15-06-2000 |
| | | | EP | 1137973 A1 | 04-10-2001 |
| | | | ES | 2283151 T3 | 16-10-2007 |
| | | | US | 6446350 B1 | 10-09-2002 |
| | | | WO | 0039647 A1 | 06-07-2000 |

EPO FORM P0459

For more details about this annex : see Official Journal of the European Patent Office, No. 12/82

11